# EUROPÄISCHE PATENTANMELDUNG

(11) **EP 2 720 008 A1**
(43) Veröffentlichungstag der Anmeldung: **16.04.2014**
(21) Anmeldenummer: 12187959.7
(22) Anmeldetag: 10.10.2012
(51) Int. Cl.: G01G 13/00, G01G 21/00, G01G 19/393

(54) **Klappensteuermechanismus, Behälter mit einem Klappensteuermechanismus und entsprechende Wägeeinrichtung**

(71) Anmelder: Multipond Wägetechnik GmbH, 84478 Waldkraiburg (DE)
(72) Erfinder: Peters, Andreas, 84544 Aschau am Inn (DE)
(74) Vertreter: Prüfer & Partner GbR European Patent Attorneys

(57) **Zusammenfassung**

Ein Klappensteuermechanismus (1) weist einen Rahmen sowie ein Klappensystem (10) mit einer Stellklappenanordnung (11) mit wenigstens einem Klappenteil (11a, 11b, 11c) auf. Wenigstens einer der Klappenteile (11a) ist beweglich derart gelagert, dass durch Bewegung des bewegbaren Klappenteils (11a) eine von der Stellklappenanordnung (11) begrenzte Öffnung (22) geöffnet werden kann bzw. verschließbar ist. An dem Rahmen ist ein feststehender Magnet (21; 31) und an dem Klappensystem (10) ein bewegbarer Magnet (16; 32) vorgesehen ist. Die Magnete (16, 21; 31, 32) sind in geöffnetem Zustand der Stellklappenanordnung (11) einander gleichpolig so angenähert, dass eine zwischen den Magneten (16, 21; 31, 32) herrschende Magnetkraft (R) einer Öffnungsbewegung der Stellklappenanordnung (11) entgegenwirkt. Der Klappensteuermechanismus (1) ist mit einem entsprechenden Behälter (20) und/oder einer Kombinationswaage einsetzbar.

## Beschreibung

Die Erfindung betrifft einen Klappensteuermechanismus gemäß dem Oberbegriff des Anspruchs 1 sowie einen Behälter mit einem derartigen Klappensteuermechanismus und eine Waage, insbesondere eine Kombinationswaage mit wenigstens einem derartigen Behälter.

Klappensteuermechanismen sind wichtige Bestandteile für verschiedenste Vorrichtungen, wie beispielsweise Abfüllanlagen, Kombinationswaagen und anderes. Sie kommen beispielsweise dann zum Tragen, wenn ein kontrolliertes Öffnen und Schließen von Öffnungen gewünscht ist. Gerade im Fall von Waagen, die zur Abfüllung einer bestimmten Menge eines Produktes verwendet werden sollen, ist es wichtig, eine genaue Dosierung und folglich eine zuverlässige Öffnung und Schließung von Klappen vornehmen zu können.

Bei der Ansteuerung von Klappen wird im Allgemeinen deren Bewegung von einer Position in eine andere Position gesteuert. Je nach Lagerung der Klappen und beabsichtigter Bewegung kann dies unterschiedliche Bewegungsmechanismen erfordern. Zu unterscheiden ist dabei zum Einen zwischen komplett zwangsgesteuerten Bewegungen, bei denen in jeder Phase der Bewegung eine oder mehrere Klappen von einem aktiven Antriebselement geführt wird. Zum anderen gibt es teilzwangsgesteuerte Klappen, die nur in Teilphasen der Bewegung von einem aktiven Antriebselement geführt werden, während die restlichen Bewegungsphasen von einem passiven Element bestimmt werden.

Es sind Klappenmechanismen für einen Behälter bekannt, die drehbar gelagerte Klappen aufweisen. Die Drehachse wird dabei beispielsweise beim Öffnen durch einen extern betätigten Hebel um einen bestimmten Winkel gedreht. Der Hebel ist derart mit den Klappen gekoppelt, dass die Klappen durch die Bewegung eine Öffnung des Behälters öffnen. Gleichzeitig wird in der vorbekannten Vorrichtung eine um die Achse angeordnete Spiralfeder durch die Drehbewegung verspannt. Beim Rückzug des Hebels wird durch die in der Feder gespeicherte Energie eine Bewegung der Drehachse samt den damit gekoppelten Klappen zurück zu der Ausgangsposition bewirkt.

Ein derartiger teilzwangsgesteuerter Klappenmechanismus führt eine Schließbewegung also unabhängig von einem aktiven Antriebselement durch. Die Klappe schließt selbsttätig ohne mechanischen Kontakt zu externen Komponenten aufgrund der in der Feder gespeicherten Energie. Die Feder kann zudem derart vorgespannt sein, dass auch in einer Schließposition eine Kraft wirkt, die den geschlossenen Zustand beibehält.

Die Federn in diesen Mechanismen können jedoch brechen. Somit kann eine Schließfunktion nicht gewährleistet werden. Auch ein Halten im geschlossenen Zustand wäre in diesem Fall nicht mehr möglich. Zudem können sich Federteile einer defekten Feder lösen und Schäden im Umfeld verursachen, oder die abzufüllenden Produkte verunreinigen.

Es ist daher Aufgabe der Erfindung, wenigstens einen der oben beschriebenen Nachteile zu beseitigen und einen Klappenmechanismus zur Verfügung zu stellen, der einen zuverlässigen Schließmechanismus aufweist. Es ist weiter Aufgabe, einen Behälter zur Verfügung zu stellen, der zuverlässig verschließbar ist.

Diese Aufgabe wird mit einem Klappensteuermechanismus gemäß dem Klappenmechanismus nach Anspruch 1 sowie einem Behälter nach Anspruch 10 gelöst. Vorteilhafte Weiterbildungen der Erfindung sind Gegenstand der Unteransprüche.

Ein erfindungsgemäßer Klappenmechanismus weist einen Rahmen sowie eine Mehrzahl von Klappenteilen, in der bevorzugten Ausführungsweise zwei Klappenteile, auf. Zumindest eines der Klappenteile ist relativ zu dem anderen Klappenteil so beweglich gelagert, dass durch dessen Bewegung dieses Klappenteils eine Öffnung, die von den Klappenteilen begrenzt und verschlossen wird, geöffnet bzw. verschlossen werden kann. Die Klappe ist vorzugsweise teilzwangsgesteuert. An dem Rahmen sowie zumindest an dem oder den beweglichen Klappenteilen ist ein Magnet vorgesehen. Dabei ist für jeden Magnet an einem bewegbaren Klappenteil ein Magnet, oder ein magnetischer Abschnitt eines Magneten an dem Rahmen vorgesehen.

Das bzw. die Klappenteile sind derart angeordnet, dass sie während des Öffnens der Öffnung den ihnen korrespondieren Magneten an dem Rahmen angenähert werden. Die Magneten sind zudem derart angeordnet, dass sie einander gleichpolig angenähert werden, was konsequenter Weise zu einer repulsiven Kraft zwischen Rahmen und Klappenteil führt. Diese Kraft ist einer Öffnungsbewegung des beweglichen Klappenteils entgegengerichtet. Dadurch wird erreicht, dass ein geöffneter Zustand des Klappenteils nur unter der Bedingung einer externen Kraft aufrechterhalten werden kann, die die abstoßende Kraft der Magneten übersteigt. So kann ein Verschließen des Klappenmechanismus zuverlässig gesichert werden, wenn die Öffnungskraft wegfällt. Zudem kann eine Abnutzung, wie sie in den bekannten Systemen auftritt, deutlich reduziert werden, und es können die Nachteile von den vorbekannten Federn vermieden werden.

In einer Fortbildung der Erfindung ist wenigstens einer der Magnete ein Permanentmagnet. Durch eine derartige permanente Magnetisierung ist der Klappenmechanismus teilzwangsgesteuert, also in einer Phase der Bewegung durch ein aktives, externes Antriebselement gesteuert, während in einer anderen Phase ein passives Element, der Magnet, unabhängig von externen Faktoren eine Steuerung der Bewegung verursacht. Dies kann die Zuverlässigkeit des Schließmechanismus weiter erhöhen.

Eine weitere vorteilhafte Ausbildung des Klappenmechanismus weist ein weiteres magnetisch aktives Element, insbesondere einen weiteren Magneten, an dem Rahmen auf, der derart angeordnet ist, dass zwischen diesem weiteren magnetisch-aktiven Element und dem Magneten an dem Klappenteil eine attraktive Kraft wirkt. Weiterhin ist dieses magnetisch aktive Element so angeordnet, dass die wirkende attraktive Kraft in einer Position des Klappenteils am Größten ist, in der das Klappenteil sich in einer Verschlussstellung befindet und die Klappenöffnung verschlossen ist. So kann ein kompletter Verschließvorgang unabhängig von externen Kräften erfolgen. Dies kann wiederum die Zuverlässigkeit des Klappenmechanismus erhöhen.

Alternativ ist hier auch vorstellbar, dass das zweite magnetisch-aktive Element ein magnetischer, insbesondere ein ferromagnetischer Abschnitt oder eine entsprechende Platte bzw. ein entsprechendes Blech ist. Auch in diesem Fall wäre das magnetische Element derart angeordnet, wie oben beschrieben, so dass eine magnetische Anziehungskraft ein Verschließen des Klappenmechanismus unterstützt oder verursacht. Natürlich kann auch der Rahmen selbst aus einem derartigen Material bestehen oder ein derartiges Material aufweisen.

Vorzugsweise ist wenigstens einer der beschriebenen Magnete axial magnetisiert. Dies bedeutet, dass sich die magnetische Polarisierung, ähnlich wie bei einem Stabmagneten, dessen Länge in einer ersten bevorzugten Ausführungsform jedoch kürzer ist als dessen Breite, entlang einer Achse des Magneten verändert, insbesondere kontinuierlich verändert. Gemäß der bevorzugten Ausführungsform der Erfindung ändert sich die Polarisierung senkrecht zu einer langen Hauptachse des Magneten. Die tatsächlichen Dimensionen dieses Magneten, sowie der übrigen noch zu beschreibenden Magnete, sind dabei so gewählt, dass eine für den erfindungsgemäßen Gedanken ausreichend große magnetische Kraft wirkt, unabhängig von der konkreten geometrischen Gestaltung des Magneten.

Es ist zudem in einer anderen Ausführungsform vorstellbar, dass einer oder mehrere der Magnete diametral magnetisiert sind. Dies bedeutet, dass, wie in einer Ausführungsform der Erfindung später näher beschrieben ist, die Pole des Magneten jeweils auf einer Seite einer diametralen Achse durch den Magneten liegen, wobei der Magnet eine runde Kontur aufweisen kann. Bei Verwendung derartiger Magneten können diese um eine Drehachse des Klappenmechanismus angeordnet sein, und um die Drehachse drehbar, also beweglich sein. Diesen gegenüber, jedoch ortsfest am Rahmen angeordnet, sind in einer speziellen Ausführungsform der Erfindung ein oder mehrere weitere diametral magnetisierte Magnete vorgesehen. Die Anordnung der Magnete erfolgt derart, dass in einem geschlossenen Zustand des Klappenmechanismus die attraktiven Magnetkräfte größer als die repulsiven Kräfte sind, insbesondere, dass die attraktiven Kräfte ein Maximum erreichen. So wird bei einer Verdrehung der Magnete zueinander eine repulsive Kraft mit größer werdendem Drehwinkel der Drehachse ebenfalls größer. Dies kann beim Wegfallen der öffnenden Kraft wiederum ein zuverlässiges Verschließen verbessern.

Weiterhin ist vorstellbar, dass in einer Weiterbildung der Erfindung einer oder mehrere der Magneten Elektromagneten sind. Dementsprechend ist auch vorstellbar, dass der gesamte Verschlußmechanismus mittels Magneten gesteuert wird, die sowohl Permanentmagneten wie auch Elektromagneten, oder, wo geeignet, magnetische Platten bzw. Bleche darstellen können.

Im Übrigen kann einer oder können mehrere der Magneten gekapselt sein. Das heißt, der bzw. die Magneten können ganz oder teilweise in einem Gehäuse aufgenommen sein. Dadurch kann der Magnet vor Umwelteinwirkungen geschützt werden, was eine Beschädigungsgefahr verringern kann. Zudem kann eine Kontamination beispielsweise der zu führenden Produkte im Falle eines defekten, insbesondere gebrochenen, Magneten vermieden werden. Gerade im Lebensmittelbereich kann so eine Gesundheitsgefährdung verringert werden. Analog ist eine derartige Ausbildung des/der Magneten natürlich auch für die noch zu beschreibenden Ausführungsformen anwendbar.

Es sei zudem erwähnt, dass ein Magnet auch dann nicht seine magnetische Wirkung verliert, wenn Teile davon abgebrochen sein sollten, so dass durch Verwendung eines Magneten bei einem Klappensteuermechanismus auch die Zuverlässigkeit der Vorrichtung erhöht werden kann.

In den obigen Weiterbildungen bzw. alternativen Ausbildungen des Klappenmechanismus sind mit "die Magneten" stets die Magneten des Rahmens wie auch die Magneten an dem bzw. an den Klappenteilen, inkl. dem zweiten magentisch-aktiven Element, gemeint, soweit dies den erfinderischen Grundgedanken erfüllt.

Natürlich ist es auch denkbar, dass die Ruheposition des Klappenmechanismus, also die Position, die ohne eine externe Kraft eingenommen wird, nicht die geschlossene, sondern die geöffnete Position ist. In diesem Fall müssen lediglich die obigen Überlegungen umgekehrt werden. Insofern dient die Bezeichnung geöffnete bzw. geschlossene Position lediglich der besseren Verständlichkeit der Erfindung ohne sich lediglich nur auf den vorliegend gewählten beispielhaften Verschlussmechanismus zu beschränken.

Ein derartiger Klappenmechanismus kann an einem Behälter vorgesehen sein. Auch kann der Rahmen des Klappenmechanismus integral mit dem Behälter ausgebildet sein, so dass letztlich der Rahmen durch den Behälter selbst oder einen Teil des Behälters gebildet wird. Der Behälter hat dabei wenigstens eine Öffnung, die durch einen erfindungsgemäßen Klappenmechanismus verschließbar ist, bzw. geöffnet werden kann. Insofern gelten obige Überlegungen bzgl. des Rahmens analog auch für den Fall, dass der Rahmen und der Behälter integral oder teilweise integral miteinander ausgebildet sind

Der Behälter kann in einer weiteren bevorzugten Ausführungsform ein Behälter einer Waage, insbesondere einer Kombinationswaage sein.

Natürlich kann auch mehr als ein Behälter in einem derartigen Rahmen oder einer derartigen Vorrichtung vorgesehen sein.

Der Klappenmechanismus kann insbesondere zum Steuern des Öffnens bzw. Schließens einer Öffnung in einem Behälter, vorzugsweise einem Behälter in einer Waage, verwendet werden. Die Steuerung der Klappe oder Klappen, bzw. des Klappenmechanismus, ist dabei vorzugsweise teilzwangsgesteuert. Es ist jedoch auch denkbar, dass der erfindungsgemäße Klappenmechanismus für eine zwangsgesteuerte Klappe bzw. einen zwangsgesteuerten Klappenmechanismus vorgesehen ist.

Einzelheiten, weitere Vorteile und Weiterbildungen der Erfindung werden anhand von Ausführungsbeispielen unter Bezugnahme auf die Figuren näher erläutert. Dabei zeigt:
Fig. 1 eine Prinzipskizze des erfindungsgemäßen Klappenmechanismus gemäß einer ersten Ausführungsform der Erfindung a) in geschlossener und b) in geöffneter Position;
Fig. 2 eine Prinzipskizze des erfindungsgemäßen Klappenmechanismus gemäß einer zweiten Ausführungsform der Erfindung a) in geschlossener und b) in geöffneter Position;
Fig. 3 eine Prinzipskizze des erfindungsgemäßen Klappenmechanismus gemäß einer dritten Ausführungsform der Erfindung a) in geschlossener und b) in geöffneter Position; c) zeigt die Anordnung von Magneten um eine Drehachse des Klappenmechanismus in einer Ruheposition; d) zeigt die Anordnung gemäß c) in einer ausgelenkten Position.

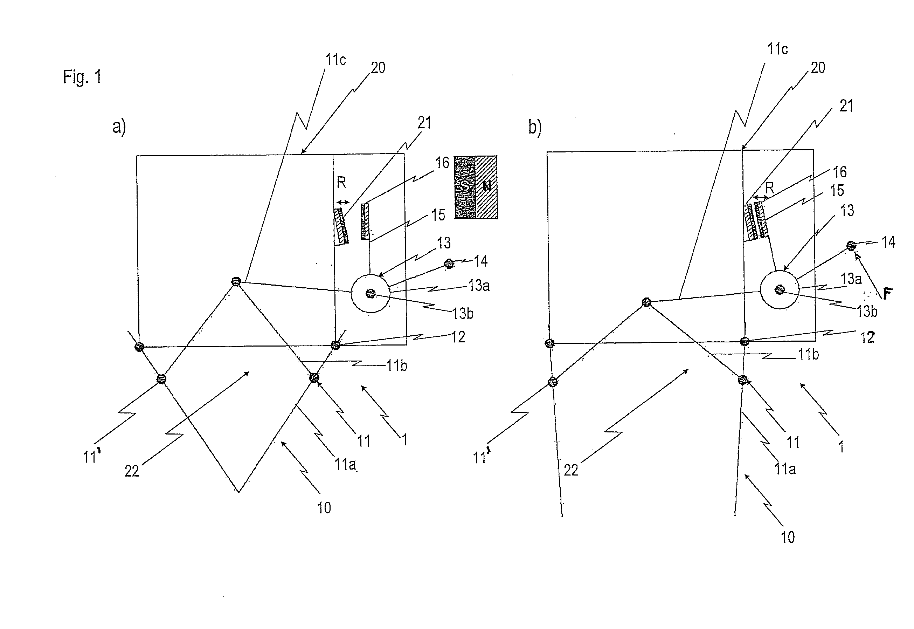

Fig 1 zeigt eine Prinzipskizze einer ersten Ausführungsform der Erfindung. Dabei ist in Fig. 1a eine geschlossene Position eines Klappensteuermechanismus 1 gezeigt. Der Klappensteuermechanismus 1 weist ein Klappensystem 10 auf, Das Klappensystem 10 ist an einem Rahmen (nicht gezeigt) befestigt. In der dargestellten Ausführungsform ist der nicht gezeigte Rahmen integral mit einem Behälter 20 ausgebildet. Der Behälter 20 weist eine Öffnung 22 auf, die durch das Klappensystem verschließbar ist.

Das Klappensystem 10 weist eine Stellklappenanordnung 11 auf, die aus bewegbaren Stellteilen bestehen, im Einzelnen einem Schließstellteil 11a, einem Mittelstellteil 11b und einem Verbindungsstellteil 11c. Das Schließstellteil 11a ist derart angeordnet, dass es die Öffnung 22 des Behälters 20 verschließen kann, wenn es in die in Fig. 1a dargestellte geschlossene Stellposition gebracht ist.

Das Schließstellteil 11a ist an einem Mittelstück mit einem Endabschnitt des Mittelstellteils 11b gelenkig gekoppelt, wobei der Kopplungspunkt nicht ortsfest ist. Zudem ist das Schließstellteil 11a an einem Befestigungspunkt 12 drehbar jedoch unbeweglich an dem Behälter 12, in anderen Ausführungsformen entsprechend an dem Rahmen, befestigt. Das Mittelstellteil 11b ist an seinem anderen Endabschnitt mit einem Endabschnitt des Verbindungsstellteils 11c gelenkig verbunden. Der Kopplungspunkt zwischen dem Mittelstellteil 11b und dem Verbindungsstellteil 11c ist ebenfalls beweglich vorgesehen.

In der gezeigten Ausführungsform ist zusätzlich eine weitere, spiegelbildlich ausgebildete Stellklappenanordnung 11', mit den entsprechenden Stellteilen korrespondierend zu dem Schließstellteil 11a und dem Mittelstellteil 11b, vorgesehen, das mit dem Endabschnitt des Verbindungsstellteils 11c verbunden ist. Auf diese Weise werden zwei die Öffnung 22 verschließende Schließstellteile 11a zur Verfügung gestellt. Analog können auch mehrere bewegbare Schließstellteile vorgesehen sein, oder nur eines. Es ist zu beachten, dass die Anzahl der verwendeten Schließstellteile von ihrer Form sowie der Form der Öffnung und des Behälters, soweit vorgesehen, abhängt. Die vorliegende Erfindung ist für verschiedene, individuelle Ausgestaltungen des Klappenmechanismus anwendbar bzw. anpassbar.

Der andere Endabschnitt des Verbindungsstellteils 11c ist mit einem Übertragungsmittel 13 verbunden. Das Übertragungsmittel 13 ist hier an dem Behälter 20 befestigt. Zudem ist das Übertragungsmittel 13 mit einem Betätigungsmittel 14 gekoppelt. In der gezeigten Ausführungsform weist das Übertragungsmittel 13 ein Gehäuse 13a auf, das um eine Achse 13b drehbar angeordnet ist. Der Endabschnitt des Verbindungsstellteils 11c ist dabei vorzugsweise mit dem Gehäuse 13a gekoppelt.

Das Betätigungsmittel 14 ist in der bevorzugten Ausführungsform ein Stellhebel. Dieser ist hier ebenfalls mit dem Gehäuse 13a des Übertragungsmittels 13 gekoppelt.

Des Weiteren ist ein weiterer Hebelarm, hier als Magnethebel 15 bezeichnet, an einem seiner Endabschnitte mit dem Gehäuse 13 gekoppelt. Im Bereich des anderen Endabschnitts des Magnethebels 15 ist ein Magnet 16 angeordnet. Der in der Ausführungsform nach Fig. 1a dargestellte Magnet 16 ist ein axial magnetisierter Permanentmagnet. Eine magnetische Polarisierung des Magneten 16 ist senkrecht zu der Erstreckungsrichtung des Magnethebels 15 vorgesehen. Durch die Bewegung des Betätigungsmittels 14 und dessen Kopplung mittels des Gehäuses mit dem Magnethebel kann der Magnet 16 entlang eines Kreisbogens bewegt werden.

An dem Rahmen bzw. hier an dem Behälter 20 ist des Weiteren ein Magnet 21 vorgesehen. Der Magnet 21 ist so an dem Behälter 20 angeordnet, dass der an dem Magnethebel 15 befestigte Magnet 16 mit dem Magnet 21 in direkte magnetische Wechselwirkung tritt. Dabei ist in der in Fig.1 gezeigten Ausführungsform der an dem Behälter befestigte Magnet 21 ebenfalls ein axial magnetisierter Permanentmagnet. Der Magnet 21 ist des Weiteren so angeordnet, dass die Magnete 16, 21 einander mit gleichen Polen zugewandt sind.

Als direkte magnetische Wechselwirkung wird hier eine Wechselwirkung bezeichnet, die größer ist als andere wirkende Kräfte, wie beispielsweise Gravitation oder Reibung. Der Einfluss der magnetischen Kraft bestimmt bei dieser direkten Wechselwirkung somit das Verhalten der wechselwirkenden Elemente, unabhängig davon, dass die Magnetkraft auch über den Bereich der direkten Wechselwirkung hinaus wirkt. Die Magnetpole sind hier durchweg auf die übliche Weise zur besseren Unterscheidung mit N und S bezeichnet.

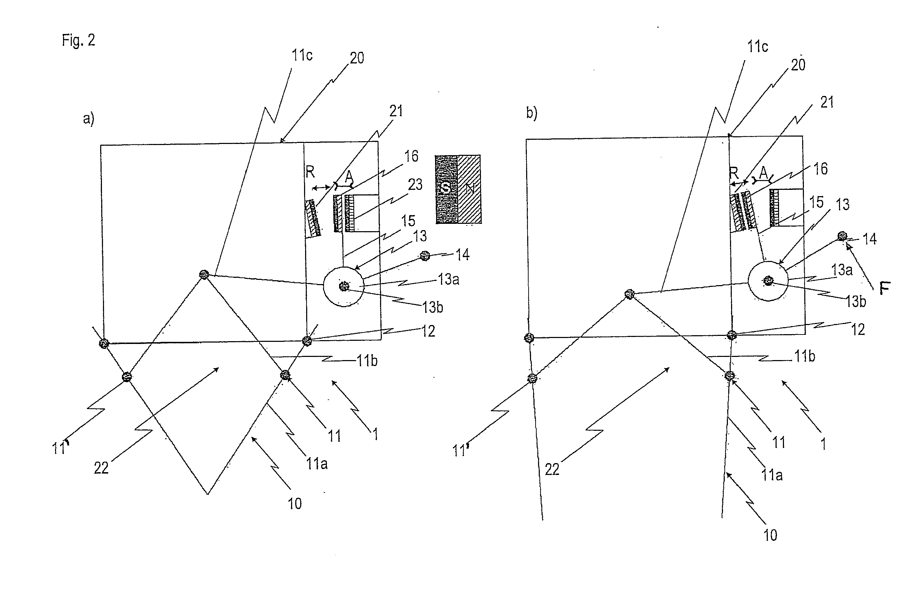

Fig. 1b zeigt eine geöffnete Position des Klappenmechanismus 1. Dieser Zustand wird herbeigeführt, indem eine auf das Betätigungsmittel 14 wirkende Kraft F eine Drehung des Gehäuses 13a um die Achse 13b des Übertragungsmittels 13 verursacht. Die Kopplung zwischen dem Betätigungsmittel 14, dem Übertragungsmittel 13 und dem Verbindungsstellteil 11c ist derart, dass eine Betätigung des Betätigungsmittels 14 aus einer Ruheposition - in der gezeigten Ausführungsform die Schließposition der Stellklappenanordnung 11 in Fig. 1- in die geöffnete Position in Fig. 2 zum einen eine Drehung des Magnethebels 15 um dieselbe Achse 16 bewirkt. Die Magneten 16, 21 sind so angeordnet, dass diese Bewegung des Magnethebels 15 eine Annäherung des Magneten 16 an dem Magnethebel 15 an den Magneten 21 des Behälters 20 bewirkt.

Zum anderen bewirkt die Drehung des Gehäuses um die Achse eine Übertragung der Rotationsbewegung auf das Klappensystem 11 derart, dass das Schließstellteil 11a die Öffnung 22 des Behälters 20 öffnet.

Durch die Annäherung der Magneten 16, 21 kommt es zu einem Anstieg einer repulsiven Kraft R zwischen den Magneten 16, 21, dargestellt durch den Doppelpfeil in Fig. 1. Dies hat zur Folge, dass bei Wegfall der externen Kraft F, oder, wenn die Abstoßkraft R die externe Kraft F übersteigt, die repulsive Kraft R eine Rückbewegung des Magneten 16 von dem an dem Behälter befestigten Magneten 21 bewirkt. Durch die oben beschriebene Kopplung der Bewegung des Klappensystems 11 an die Bewegung des Gehäuses 13a erfolgt somit gleichzeitig wieder eine Schließbewegung des Klappensystems 11 zum Verschließen der Öffnung 22.

Fig. 2 zeigt eine Weiterbildung der Erfindung, wie sie in Fig. 1 dargestellt ist. Die Ausführungsform nach Fig. 2 unterscheidet sich vorliegend lediglich in der Präsenz eines weiteren Magneten 23, der an dem Rahmen, bzw. an dem Gehäuse 20 befestigt ist. Die übrigen Elemente sind dem beschriebenen Aufbau identisch und mit denselben Bezugszeichen bezeichnet. Auf eine Beschreibung dieser Elemente wird daher im Folgenden verzichtet.

Der Magnet 23 ist in dieser Weiterbildung so an dem Gehäuse vorgesehen, dass der Magnet 16 an dem Magnetarm 15 mit ersterem in direkte Wirkverbindung geraten kann. Insbesondere können die Magneten in einer Ruheposition, wie sie in Fig. 2a dargestellt ist, in Wirkverbindung stehen. Dabei ist der zweite Magnet 23 hier ebenfalls ein axial magnetisierter Permanentmagnet. Dieser ist derart angeordnet, dass er dem Magneten 16 an dem Magnethebel 15 gegenpolig zugewandt ist, d.h., zwischen den Magneten 16, 23 wirkt eine attraktive Kraft A.

Neben den oben beschriebenen Wirkungen muss hierbei lediglich beachtet werden, dass die attraktive Kraft A eine Haltekraft ist, die ein Verbleiben in der Ruheposition des Klappenmechanismus bewirkt, so dass beim Öffnen des Klappenmechanismus eine externe Kraft aufgewendet werden muss, die die attraktive Kraft kompensiert bzw. übersteigt.

In einer anderen Ausführungsform kann der zweite Magnet auch lediglich ein magnetisch aktives Element, wie ein magnetisches Blech, insbesondere ein ferromagnetisches Blech, sein. Auch in diesem Fall würde zwischen dem Magnet 16 an dem Magnethebel 15 und dem magnetisch aktiven Element eine attraktive Kraft wirken, wie oben beschrieben.

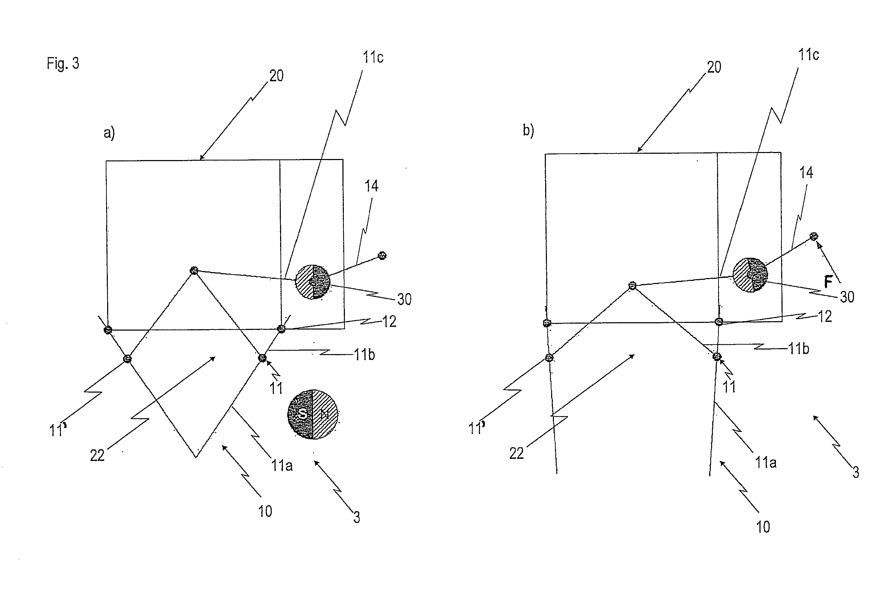

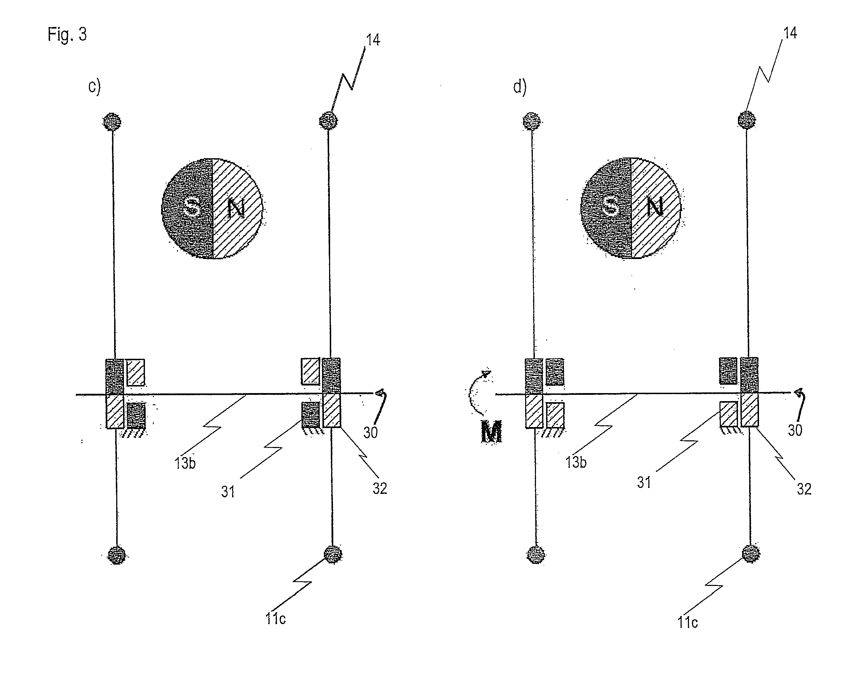

In einer dritten Ausführungsform der Erfindung, wie sie in Fig. 3 gezeigt ist, sind in einem Klappensteuermechanismus 3 diametral magnetisierte Magnete vorgesehen, wie in Fig. 3c dargestellt ist. Diese Ausführungsform unterscheidet sich von den zuvor beschriebenen Ausführungsformen darin, dass keine axial magnetisierten Magnete an dem Behälter 20 angeordnet sind. Zudem ist der Magnethebel in dieser Ausführungsform nicht vorgesehen (vgl. Fig. 3a,b).

In der folgenden Beschreibung wird auf die Unterschiede zwischen den Ausführungsformen eingegangen. Auf eine Wiederholung der Beschreibung von Elementen, die identische Bezugszeichen haben, wird wiederum verzichtet.

Die diametral magnetisierten Magneten, im Folgenden Diametralmagneten, sind um die Achse 13b des Übertragungsmittels 13 angeordnet. Dabei ist ein fester Diametralmagnet 31 fest relativ zu dem Behälter 20 angeordnet. Ein weiterer, drehbarer Diametralmagnet 32 ist mit der Achse und darüber auch mit dem Klappensystem verbunden. Insofern können die Magneten insbesondere auch Ringmagnete sein. Fig. 3c zeigt einen Ruhezustand des Klappenmechanismus 3. Wie aus Fig. 3c deutlich wird, sind die Magneten 31, 32 derart angeordnet, dass die Südpolarisierung S des einen Magneten mit der Nordpolarisierung N des entsprechend anderen Magneten in direkter Wirkverbindung steht. So wird die Achse 13b in der Ruheposition gehalten. Wird durch eine externe Kraft F der Drehwinkel gegen die attraktive Magnetkraft verdreht (vgl. Fig. 3b), so wächst durch die direkte Wirkverbindung von einander abstoßenden Polarisierungen der einander gegenüberliegenden Diametralmagnete 31, 32 eine repulsive Kraft, die einer Drehbewegung M des drehbaren Diametralmagneten 32 entgegengerichtet wirkt (vgl. Fig. 3d). Bei Wegfallen der externen Kraft F wirkt folglich auch hier eine Kraft, die eine Rückkehr in die Ruheposition bewirkt, so wie eine Kraft, die einen Ruhezustand aufrechterhält.

Es versteht sich, dass es unerheblich ist, welche konkreten Pole einander gegenüberliegen, so lange die Pole gemäß den Ausführungen gegen- oder gleichpolig sind. Zudem sind natürlich auch Mischformen der oben beschriebenen konkreten Ausführungsformen denkbar, wonach sowohl diametral als auch axial magnetisierte Magnete im Sinne dieser Erfindung eingesetzt werden.

Für die oben beschriebenen Ausführungsformen ist es auch denkbar, dass Elektromagnete verwendet werden, ohne sich von dem Umfang der Erfindung zu entfernen.

Ein Klappensteuermechanismus 1 weist einen Rahmen sowie ein Klappensystem 10 mit einer Stellklappenanordnung 11 mit wenigstens einem Klappenteil 1la 11b, 11c auf. Wenigstens einer der Klappenteile 11a ist beweglich derart gelagert ist, dass durch Bewegung des bewegbaren Klappenteils 11a eine von der Stellklappenanordnung 11 begrenzte Öffnung 22 geöffnet werden kann bzw. verschließbar ist. An dem Rahmen ist ein feststehender Magnet 21 ; 31 und an dem Klappensystem 10 ein bewegbarer Magnet 16; 32 vorgesehen ist. Die Magnete 16, 21; 31, 32 sind in geöffnetem Zustand der Stellklappenanordnung 11 einander gleichpolig so angenähert, dass eine zwischen den Magneten 16, 21 ; 31, 32 herrschende Magnetkraft R einer Öffnungsbewegung der Stellklappenanordnung 11 entgegenwirkt. Der Klappensteuermechanismus 1 ist mit einem entsprechenden Behälter 20 und/oder einer Kombinationswaage einsetzbar.

### Bezugszeichenliste

- 1: Behälter mit Klappensteuermechanismus gemäß einer ersten Ausführungsform
- 3: Behälter mit Klappensteuermechanismus gemäß einer dritten Ausführungsform
- 10: Klappensystem
- 11: Stellklappenanordnung
- 11a: Schließstellteil
- 11b: Mittelstellteil
- 11c: Verbindungsstellteil
- 12: Drehpunkt
- 13: Übertragungsmittel
- 14: Betätigungsmittel
- 15: Magnethebel
- 16: bewegbarer Magnet
- 20: Behälter
- 21: fester Magnet
- 22: Behälteröffnung
- 23: fester Magnet
- 30: Diametralmagnetverschluss
- 31: fester Diametralmagnet
- 32: drehbarer Diametralmagnet

## Patentansprüche

1. Klappensteuermechanismus (1) aufweisend einen Rahmen sowie ein Klappensystem (10) aufweisend eine Stellklappenanordnung (11) mit wenigstens einem Klappenteil (11a, 11b, 11c), wobei wenigstens einer der Klappenteile (11a) beweglich derart gelagert ist, dass durch Bewegung des bewegbaren Klappenteils (11a) eine von der Stellklappenanordnung (11) begrenzte Öffnung (22) geöffnet werden kann bzw. verschließbar ist,
**dadurch gekennzeichnet, dass**
an dem Rahmen ein feststehender Magnet (21; 31) und an dem Klappensystem (10) ein bewegbarer Magnet (16; 32) vorgesehen ist, wobei die Magnete (16, 21; 31, 32) in geöffnetem Zustand der Stellklappenanordnung (11) einander gleichpolig angenähert sind, derart, dass eine zwischen den Magneten (16, 21; 31, 32) herrschende Magnetkraft (R) einer Öffnungsbewegung der Stellklappenanordnung (11) entgegenwirkt.

2. Klappensteuermechanismus (1) gemäß Anspruch 1, **dadurch gekennzeichnet, dass** wenigstens einer der Magnete (16, 21) ein Permanentmagnet ist.

3. Klappensteuermechanismus (1) gemäß einem der vorhergehenden Ansprüche, **dadurch gekennzeichnet, dass** an dem Rahmen ein zweites magnetisch-aktives Element (23) vorgesehen ist, wobei der Magnet (16) des Klappensystems (11) eine attraktive Magnetkraft (A) relativ zu dem zweiten magnetisch-aktiven Element (23) erfährt.

4. Klappenmechanismus (1) gemäß Anspruch 3, **dadurch gekennzeichnet, dass** das zweite magnetisch-aktive Element (23) ein Magnet, insbesondere ein Permanentmagnet, ist.

5. Klappenmechanismus (1) gemäß Anspruch 3, **dadurch gekennzeichnet, dass** das zweite magnetisch-aktive Element ein magnetisches Material, insbesondere ein ferromagnetisches Blech, aufweist.

6. Klappensteuermechanismus (1) gemäß einem der vorhergehenden Ansprüche, **dadurch gekennzeichnet, dass** wenigstens einer der Magnete (16, 21, 23) ein axial magnetisierter Magnet ist.

7. Klappensteuermechanismus (3) gemäß einem der Ansprüche 1 - 5, **dadurch gekennzeichnet, dass** wenigstens einer der Magnete des beweglichen Klappenteils und/oder wenigstens einer der Magnete des Rahmens ein diametral magnetisierter Magnet (31, 32) ist.

8. Klappensteuermechnismus (1; 3) gemäß einem der vorhergehenden Ansprüche, **dadurch gekennzeichnet, dass** wenigstens einer der Magnete (16, 21; 23; 31, 32) ein Elektromagnet ist.

9. Klappensteuermechanismus gemäß einem der vorhergehenden Ansprüche, **dadurch gekennzeichnet, dass** wenigstens einer der Magneten bzw. der magnetisch-aktiven Elemente gekapselt ist.

10. Behälter (20) mit einem Klappensteuermechanismus (1; 3) gemäß einem der vorhergehenden Ansprüche, wobei der Behälter (20) wenigstens eine durch den Klappensteuermechanismus (1; 3) zu verschließende Öffnung (22) aufweist.

11. Behälter gemäß Anspruch 10, wobei der Rahmen des Klappensteuermechanismus (1; 3) integral, insbesondere einstückig, mit dem Behälter (20) ausgebildet ist.

12. Waage, insbesondere Kombinationswaage, mit wenigstens einem Behälter (20) gemäß einem der Ansprüche 10 oder 11.

13. Verwendung eines Klappenmechanismus gemäß einem der Ansprüche 1 - 9 zum Steuern einer Klappenöffnung eines Behälters, insbesondere in einer Kombinationswaage.
